# EUROPEAN PATENT SPECIFICATION

(11) **EP 3 763 611 B1**
(45) Date of publication and mention of the grant of the patent: **02.08.2023**
(21) Application number: 20177927.9
(22) Date of filing: 03.06.2020
(51) Int. Cl.: B62J 17/02

(54) **STRADDLED VEHICLE**
GRÄTSCHSITZFAHRZEUG
VÉHICULE À ENFOURCHER

(30) Priority: 09.07.2019 JP 2019127811
(43) Date of publication of application: 13.01.2021
(73) Proprietor: YAMAHA HATSUDOKI KABUSHIKI KAISHA, Iwata-shi Shizuoka 438-8501 (JP)
(72) Inventor: TANTITAWEEPORN, Taspon, 10540 Samutprakarn (TH); PHUAKNOY, Tanakorn, 10540 Samutprakarn (TH)
(74) Representative: Grünecker Patent- und Rechtsanwälte PartG mbB

(56) References cited:
- JP-A- 2008 100 611
- US-A1- 2006 254 844

## Description

The present invention relates to a straddled vehicle according to the preamble of independent claim 1. Such a straddled vehicle can be taken from the prior art document JP 2008-100611 A.

There has been conventionally known a type of straddled vehicle that includes a fuel tank supported by a frame of a vehicle body and a tank cover covering the lateral sides of the fuel tank (see JP 5751916 B2). The tank cover is fixed to the fuel tank and is gripped by the knees of a rider. Another straddled vehicle with a tank cover and side covers is shown in the prior art document US 2006/254844 A1.

In such a conventionally known type of straddled vehicle, vibration of the fuel tank is transferred to the tank cover. Hence, a rider is likely to be affected by the vibration of the fuel tank when gripping the tank cover with the knees. Besides, when the tank cover is thus configured to be gripped with the knees of the rider, it is required to separately provide a structure for inhibiting deflection of the tank cover as described in JP 5751916 B2.

Moreover, the fuel tank is a heavy object and transfers vibration generated by the vehicle body therethrough to the tank cover. Furthermore, the tank cover is shaped along the fuel tank and has a relatively small size. Hence, vibration transferred thereto from the fuel tank becomes large in amplitude. The vibration of the tank, when becoming large in amplitude, inevitably affects a side cover provided directly below the tank cover. Because of this, in the conventionally known type of straddled vehicle, the tank cover is attached as a separate member to the vehicle body at a predetermined gap from the side cover in consideration of not only the above problem but also a problem of interference with the side cover rigidly fixed to the frame of the vehicle body. In this case, however, the appearance of the conventionally known type of straddled vehicle is not aesthetic. In view of this, it can be assumed to eliminate the gap by fastening both the tank cover and the side cover for the purpose of enhancement in external aesthetics. However, it is difficult in normal design concepts to realize fastening both the tank cover moved by vibration and the side cover fixed to the frame.

It is an object of the present invention to provide a straddled vehicle that can inhibit vibration and deflection of a tank cover, and simultaneously, enhance external aesthetics of the straddled vehicle. According to the present invention said object is solved by a straddled vehicle having the features of independent claim 1. Preferred embodiments are laid down in the dependent claims.

A straddled vehicle according to an aspect of the present teaching includes a head pipe, a vehicle body frame, a side cover, a fuel tank and a tank cover. The vehicle body frame includes a main frame and a rear frame. The main frame extends backward from the head pipe. The rear frame extends backward from the main frame. The side cover is fixed to the vehicle body frame. The fuel tank is supported by the vehicle body frame. The tank cover is connected to the fuel tank and includes a cover body disposed directly above the side cover in order to cover the fuel tank. The side cover is fixed to the tank cover on an inner side of the tank cover. The side cover includes at least one cover fastening portion and at least one frame fastening portion. The at least one cover fastening portion is fixed to the tank cover and is disposed to overlap with the tank cover in a vehicle side view. The at least one frame fastening portion is fixed to the vehicle body frame and is disposed below the cover fastening portion.

In the straddled vehicle according to the present preferred embodiment, the at least one cover fastening portion is provided to overlap with the tank cover in the vehicle side view. Hence, the tank cover can be increased in entire size. Accordingly, vibration of the tank cover can be made small in amplitude. In other words, vibration transmitted from the fuel tank becomes likely to be absorbed by the tank cover. Accordingly, the vibration of the tank cover can be inhibited.

Moreover, the at least one cover fastening portion and the at least one frame fastening portion are disposed at an interval in an up-and-down direction. Hence, vibration transmitted from the tank cover to the side cover can be absorbed by deflection of the tank cover and the side cover caused at the mating surfaces thereof located between the at least one frame fastening portion and the at least one cover fastening portion. Accordingly, the vibration transmitted from the tank cover to the side cover can be inhibited. Besides, the tank cover is fixed to the side cover. Hence, the tank cover is herein enhanced in stiffness compared to a configuration that only the tank cover is fixed to the fuel tank.

Incidentally, it has been required in well-known straddled vehicles to provide a fastening point as a separate component in a region around a knee grip portion so as to reduce deflection of the tank cover caused in knee gripping and reliably obtain required stiffness at the fastening point. By contrast, the tank cover and the side cover are herein fastened at the mating surfaces thereof, whereby deflection of the tank cover can be effectively inhibited.

Furthermore, in the vehicle side view, the gap between the tank cover and the side cover is invisible in appearance, whereby external aesthetics can be enhanced. Besides, the side cover is fixed to the tank cover on the inner side of the tank cover, whereby external aesthetics can be enhanced.

Preferably, the at least one frame fastening portion is disposed below the cover body of the tank cover. In this case, the mating surfaces of the tank cover and the side cover, located between the at least one frame fastening portion and the at least one cover fastening portion, can be made large. Hence, the vibration transmitted from the tank cover to the side cover can be effectively inhibited by deflection of the mating surfaces.

Preferably, the cover body of the tank cover includes a knee grip portion, and at least one of the at least one cover fastening portion is disposed in a region around the knee grip portion in the vehicle side view. In this case, stiffness in the region around the knee grip portion is enhanced. Hence, when the knee grip portion is gripped with the knees of a rider, deflection of the tank cover can be effectively inhibited.

Preferably, the at least one cover fastening portion of the side cover is disposed on the inner side of the tank cover. In this case, external aesthetics can be enhanced.

Preferably, the cover body of the tank cover straightly extends at a lower end portion thereof in the vehicle side view. In this case, deflection is unlikely to occur intensively in a specific part in comparison with, for instance, a configuration that the cover body of the tank cover is tilted at the lower end portion thereof with respect to a back-and-forth direction in the vehicle side view.

Preferably, the at least one cover fastening portion includes a plurality of cover fastening portions provided at intervals in a back-and-forth direction while the at least one frame fastening portion includes a plurality of frame fastening portions provided at intervals in the back-and-forth direction. In this case, the side cover and the vehicle body frame can be firmly fixed to each other, and furthermore, the side cover and the tank cover can be firmly fixed to each other.

Preferably, the main frame is exposed outward. In this case, vibration and deflection of the tank cover can be inhibited in the straddled vehicle in which the main frame is exposed outward.

Preferably, the straddled vehicle further includes a seat supported by the rear frame. The tank cover and the seat extend at lower end portions thereof on straight lines approximately overlapping with each other in the vehicle side view. In this case, knee gripping is enabled in the vicinity of the at least one cover fastening portion with high stiffness by aligning the line of the lower end portion of the seat and that of the lower end portion of the tank cover.

According to the present invention, the tank cover further includes an extending portion. The extending portion extends more downward than the fuel tank and is connected to the side cover. The extending portion includes an opening portion for inserting therein one of the at least one cover fastening portion. The side cover is fitted to the tank cover through the opening portion. In this case, the side cover and the tank cover can be easily fastened to each other.

Preferably, the one of the at least one cover fastening portion inserted into the opening portion is fixed to the tank cover and is disposed above the extending portion. The at least one frame fastening portion of the side cover is disposed below the extending portion. In this case, deflection of the tank cover can be effectively inhibited by the extending portion.

Preferably, the extending portion is disposed directly below the knee grip portion of the tank cover. In this case, when the knee grip portion is gripped with the knees of the rider, deflection of the tank cover can be effectively inhibited by the extending portion.

Preferably, the tank cover includes a frame fastening portion fixed to the vehicle body frame, and the frame fastening portion of the tank cover is provided in the extending portion. In this case, the tank cover can be fixed to the vehicle body frame with a simple configuration. Besides, the tank cover is enhanced in stiffness. Hence, deflection of the tank cover can be inhibited when the knee grip portion is gripped with the knees of the rider.

According to the present teaching, it is possible to inhibit vibration and deflection of the tank cover in the straddled vehicle.

### BRIEF DESCRIPTION OF THE DRAWINGS

FIG. 1 is a left side view of a straddled vehicle.
FIG. 2 is a cross-sectional view of FIG. 1 taken along line II-II.
FIG. 3 is a view of a side cover and the surroundings thereof seen from an inner side in a vehicle width direction.
FIG. 4 is a left side view of the straddled vehicle from which a tank cover is detached.
FIG. 5 is a view of a cover body seen from an outer side in the vehicle width direction.
FIG. 6 is a view of the cover body seen from the inner side in the vehicle width direction.
FIG. 7 is a view of the tank cover seen from the outer side in the vehicle width direction.
FIG. 8 is a view of the tank cover seen from the inner side in the vehicle width direction.

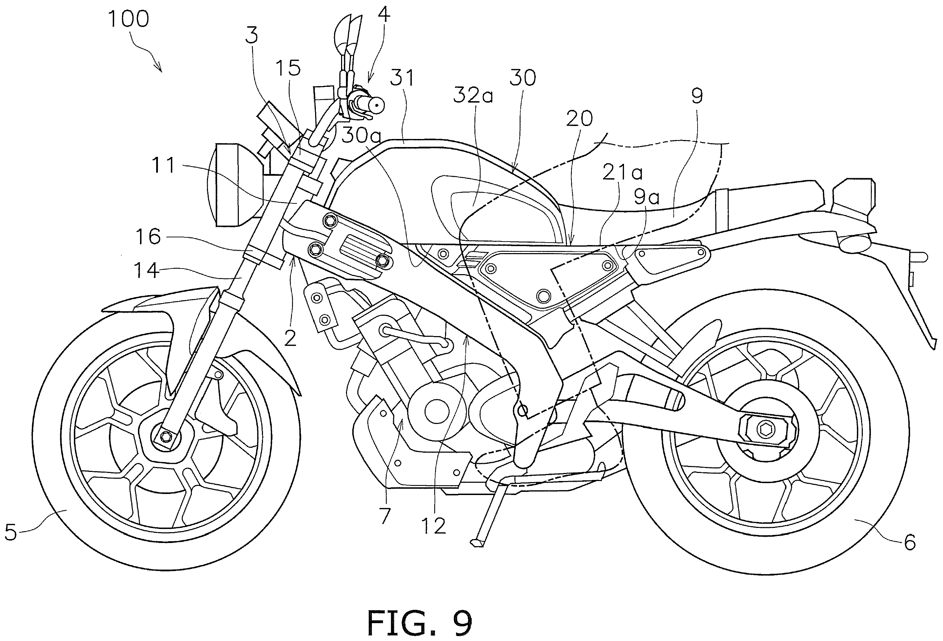

FIG. 9 is a diagram for explaining a condition that a rider grips the tank cover with the knees.

### DETAILED DESCRIPTION OF THE PREFERRED EMBODIMENTS

A preferred embodiment of a straddled vehicle according to an aspect of the present teaching will be hereinafter explained with reference to drawings. It should be noted that in the following explanation, terms indicating such directions as "back and forth", "up and down" and "right and left" are explained based on directions seen from a rider in operation of a straddled vehicle 100. Besides, the term "outer side in a vehicle width direction" means a side far from the center of the straddled vehicle 100 in the vehicle width direction. By contrast, the term "inner side in the vehicle width direction" means a side near to the center of the straddled vehicle 100 in the vehicle width direction.

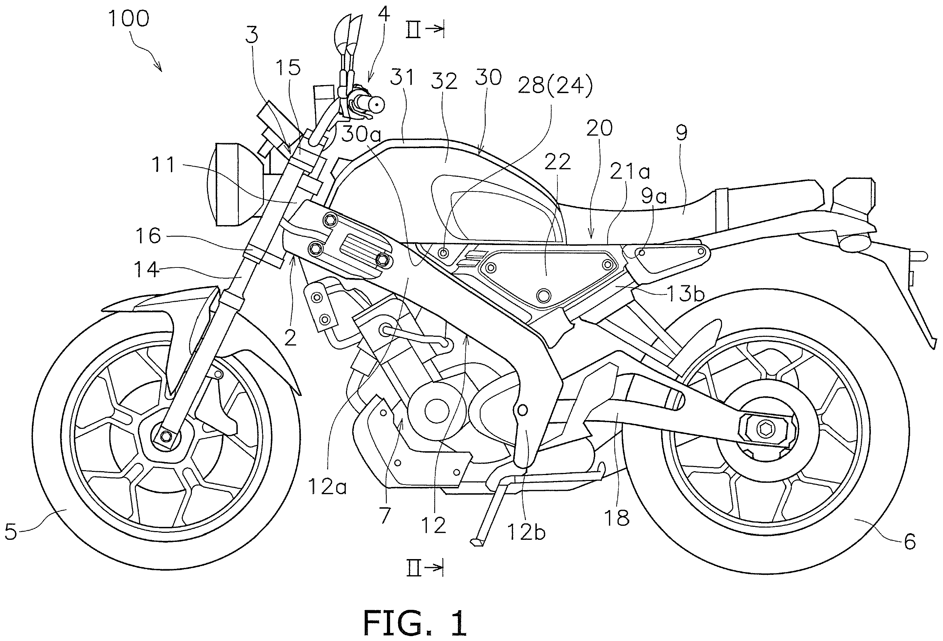

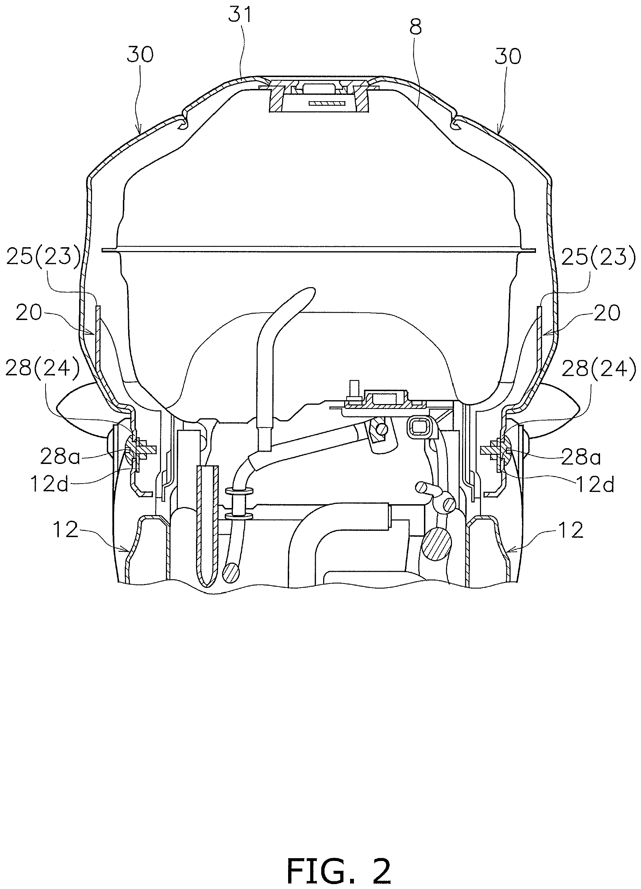

FIG. 1 is a left side view of the straddled vehicle 100. FIG. 2 is a cross-sectional view of FIG. 1 taken along line II-II. The straddled vehicle 100 includes a vehicle body frame 2, a steering device 3, a handle 4, a front wheel 5, a rear wheel 6, an engine 7, a fuel tank 8, a seat 9, a pair of right and left side covers 20 and a pair of right and left tank covers 30.

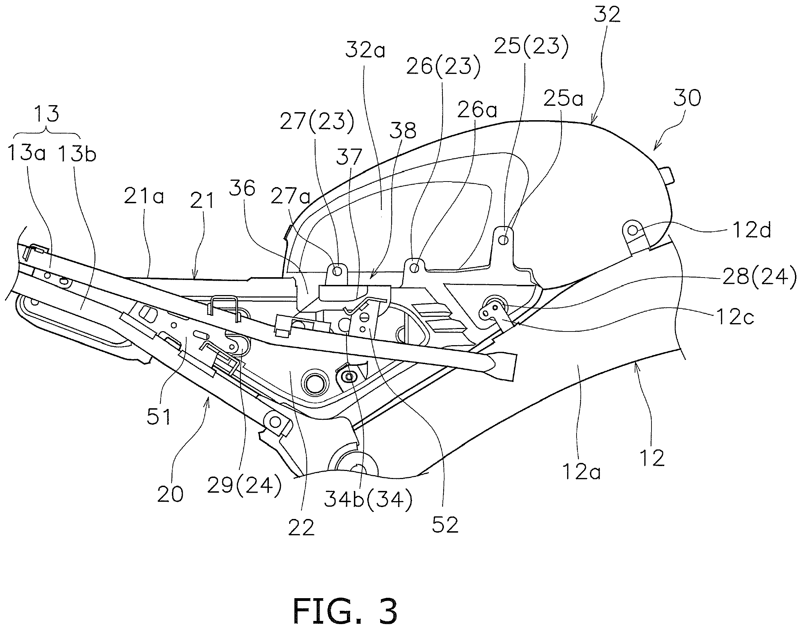

FIG. 3 is a view of one of the side covers 20, which is disposed on the left side of the straddled vehicle 100, and the surroundings thereof seen from the inner side in the vehicle width direction. As shown in FIGS. 1 to 3, the vehicle body frame 2 includes a head pipe 11, a pair of right and left main frames 12 and a rear frame 13. The head pipe 11 is disposed in the center of the straddled vehicle 100 in the vehicle width direction.

Each main frame 12 is connected at the front end thereof to the head pipe 11. It should be noted that the term "connection" is not limited to direct connection and encompasses indirect connection. Besides, the term "connection" is not limited to a condition that separate members are fixed to each other and encompasses a condition that a plurality of portions in an integrated member continue to each other. Each main frame 12 extends backward from the head pipe 11. The interior of each main frame 12 is hollow.

Each main frame 12 includes a forwardly and backwardly extending portion 12a and a downwardly extending portion 12b. The forwardly and backwardly extending portion 12a extends backward and downward from the head pipe 11. The downwardly extending portion 12b extends downward from the rear end of the forwardly and backwardly extending portion 12a.

Each main frame 12 is, at least in part, exposed outward on the outer side in the vehicle width direction and is thus visible in the vehicle side view. In other words, each main frame 12 is not entirely covered with a member such as a cowl or a cover.

As shown in FIG. 3, the rear frame 13 is connected to each main frame 12. Detailedly, the rear frame 13 includes an upper rear frame 13a and a lower rear frame 13b. The upper rear frame 13a extends backward from the vicinity of the middle of the forwardly and backwardly extending portion 12a of each main frame 12. The lower rear frame 13b is disposed directly below the upper rear frame 13a. The lower rear frame 13b extends backward from the rear end of the forwardly and backwardly extending portion 12a of each main frame 12.

The steering device 3 is supported by the head pipe 11 so as to be turnable. The steering device 3 includes a steering shaft (not shown in the drawings), a pair of right and left front forks 14, a top bridge 15 and a bottom bridge 16.

The steering shaft is inserted into the head pipe 11 and is supported by the head pipe 11 so as to be turnable. The steering shaft is coupled at the upper end thereof to the top bridge 15 and is coupled at the lower end thereof to the bottom bridge 16.

The pair of front forks 14 extends forward and downward from the top bridge 15 and is coupled at the lower end thereof to the front wheel 5. The pair of front forks 14 is coupled to the steering shaft through the top bridge 15 and the bottom bridge 16 and is supported by the head pipe 11 so as to be turnable.

The handle 4 is fixed to the upper portion of the steering device 3. The engine 7 is disposed directly below the pair of main frames 12. The engine 7 is exposed outward and is not covered with the member such as the cowl or the cover.

The front wheel 5 is supported by the pair of front forks 14 so as to be rotatable. The rear wheel 6 is supported by a swing arm 18 coupled to the rear ends of the pair of main frames 12 so as to be rotatable.

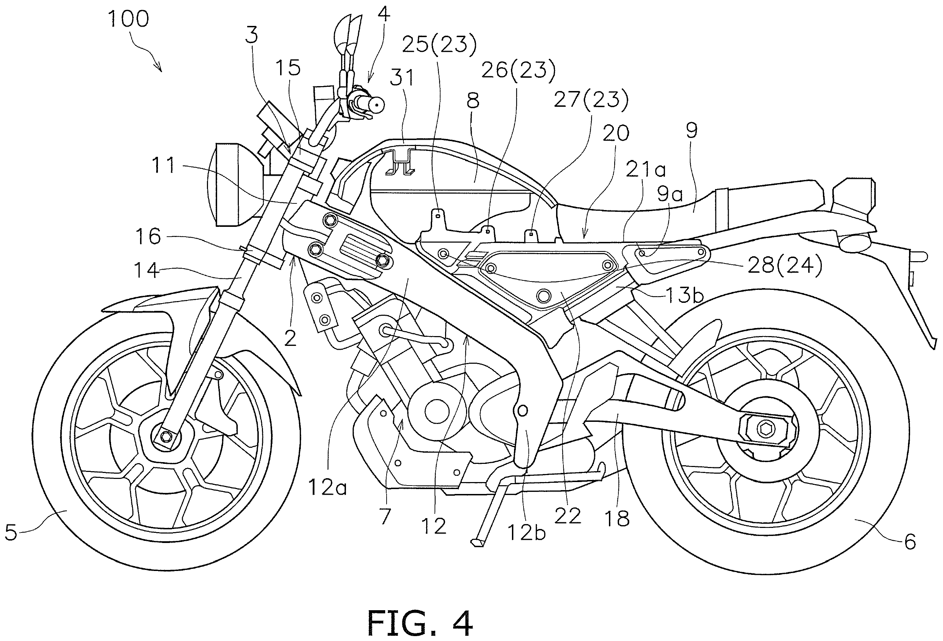

FIG. 4 is a left side view of the straddled vehicle 100 from which the pair of tank covers 30 is detached. The fuel tank 8 is disposed behind the head pipe 11 and directly above the pair of main frames 12. The fuel tank 8 is supported by the vehicle body frame 2. The seat 9 is disposed behind the fuel tank 8. The seat 9 is supported by the rear frame 13.

As shown in FIGS. 3 and 4, each side cover 20 is made in approximately the shape of an inverted triangle in the vehicle side view and is disposed on the outer side of the rear frame 13 in the vehicle width direction. As shown in FIG. 1, each side cover 20 is disposed directly above the corresponding main frame 12 and directly below the corresponding tank cover 30 and the seat 9. The front end of each side cover 20 is located more backward than the front end of the corresponding tank cover 30 and more forward than the rear end of the corresponding tank cover 30. As shown in FIG. 4, the front end of each side cover 20 is located more backward than the front end of the fuel tank 8 and more forward than the rear end of the fuel tank 8. The rear end of each side cover 20 is located more backward than the corresponding main frame 12. The rear end of each side cover 20 is located more backward than the rear end of the corresponding tank cover 30 and more backward than the front end of the seat 9.

The pair of side covers 20 is fixed to the vehicle body frame 2. In the present preferred embodiment, each side cover 20 is fixed to the forwardly and backwardly extending portion 12a of the corresponding main frame 12, the upper rear frame 13a and the lower rear frame 13b.

Each side cover 20 includes a cover body 21, a cover portion 22, at least one cover fastening portion 23 and at least one frame fastening portion 24.

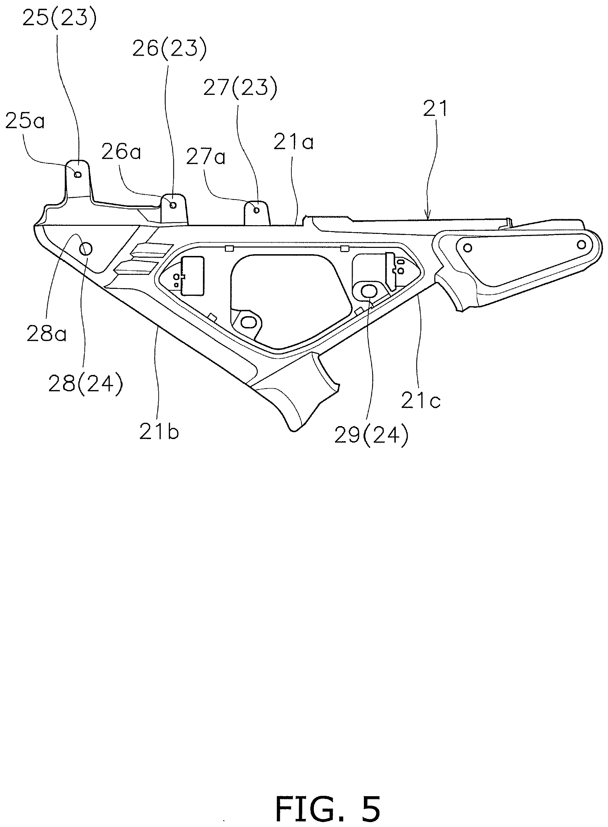

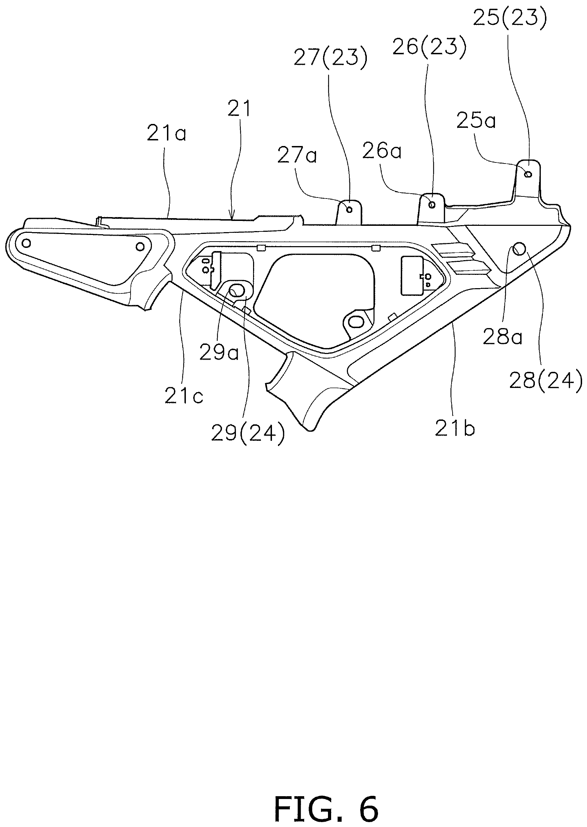

FIG. 5 is a view of the cover body 21 as seen from the outer side in the vehicle width direction. FIG. 6 is a view of the cover body 21 as seen from the inner side in the vehicle width direction. The cover body 21 is made in approximately the shape of an inverted triangle in the vehicle side view. Detailedly, an upper end portion 21a of the cover body 21 straightly extends in the back-and-forth direction in the vehicle side view. The upper end portion 21a is located directly below the corresponding tank cover 30 and the seat 9. A front lower portion 21b of the cover body 21 extends backward and downward from the front end of the upper end portion 21a. A rear lower portion 21c of the cover body 21 extends backward and upward from the rear end of the front lower portion 21b toward the rear end of the upper end portion 21a.

As shown in FIGS. 1 and 3, the cover portion 22 is detachably fixed to the cover body 21 so as to cover the vicinity of the middle of the cover body 21 from the outer side in the vehicle width direction. It should be noted that the cover portion 22 may be integrated with the cover body 21.

The at least one cover fastening portion 23 of each side cover 20 is disposed to overlap with the corresponding tank cover 30 in the vehicle side view. In the present preferred embodiment, the at least one cover fastening portion 23 is disposed on the inner side of the corresponding tank cover 30. In other words, the at least one cover fastening portion 23 is covered with the corresponding tank cover 30 from the outer side in the vehicle width direction.

The at least one cover fastening portion 23 includes first to third cover fastening portions 25 to 27. In other words, in the present preferred embodiment, each side cover 20 includes three cover fastening portions 23. The first to third cover fastening portions 25 to 27 are disposed at intervals in the back-and-forth direction. The first to third cover fastening portions 25 to 27 are disposed above the upper end portion 21a of the cover body 21. The first to third cover fastening portions 25 to 27 are integrated with the cover body 21.

The first cover fastening portion 25 is disposed in the vicinity of the front end of the upper end portion 21a of the cover body 21. As shown in FIG. 4, the first cover fastening portion 25 overlaps with the fuel tank 8 in the vehicle side view. The first cover fastening portion 25 includes a through hole 25a penetrating therethrough in the vehicle width direction.

The second cover fastening portion 26 is disposed more backward than the first cover fastening portion 25. In the vehicle side view, the second cover fastening portion 26 is disposed to overlap with an intermediate part of the front lower portion 21b in approximately the up-and-down direction. The second cover fastening portion 26 is disposed below the first cover fastening portion 25. In other words, the first cover fastening portion 25 is disposed above the second cover fastening portion 26. The second cover fastening portion 26 includes a through hole 26a penetrating therethrough in the vehicle width direction. The through hole 26a is disposed below the through hole 25a.

The third cover fastening portion 27 is disposed more backward than the second cover fastening portion 26. Besides, the third cover fastening portion 27 is disposed more forward than a back-and-forth directional intermediate portion of the upper end portion 21a. In the vehicle side view, the third cover fastening portion 27 is disposed to overlap with the rear end of the front lower portion 21b in approximately the up-and-down direction or is disposed more forward than the rear end of the front lower portion 21b. The third cover fastening portion 27 is disposed below the first cover fastening portion 25. The third cover fastening portion 27 includes a through hole 27a penetrating therethrough in the vehicle width direction. The through hole 27a is disposed below the through hole 25a.

The at least one frame fastening portion 24 includes a first frame fastening portion 28 and a second frame fastening portion 29. In other words, in the present preferred embodiment, each side cover 20 includes two frame fastening portions 24. The at least one fastening portion 24 is disposed below the at least one cover fastening portion 23 and is fixed to the vehicle body frame 2.

The first frame fastening portion 28 is disposed below the upper end portion 21a. The first frame fastening portion 28 is disposed more forward than the cover portion 22. The first frame fastening portion 28 is disposed at an interval from the first cover fastening portion 25 in the up-and-down direction. In the vehicle side view, the first frame fastening portion 28 overlaps with the first cover fastening portion 25 in approximately the up-and-down direction. The first frame fastening portion 28 includes a through hole 28a penetrating therethrough in the vehicle width direction. As shown in FIG. 3, the first frame fastening portion 28 of each side cover 20 is fixed to a bracket 12c provided on the forwardly and backwardly extending portion 12a of the corresponding main frame 12 by a bolt.

The second frame fastening portion 29 is provided in the cover body 21 while penetrating therethrough in the vehicle width direction. The second frame fastening portion 29 is disposed at an interval from the first frame fastening portion 28 in the back-and-forth direction. The second frame fastening portion 29 is disposed more backward than the first frame fastening portion 28 and the third cover fastening portion 27. The second frame fastening portion 29 overlaps with the cover portion 22 in the vehicle side view. The second frame fastening portion 29 is disposed directly above the rear lower portion 21c. The second frame fastening portion 29 includes a through hole 29a penetrating therethrough in the vehicle width direction. The second frame fastening portion 29 is fixed to a bracket 51 provided on the lower rear frame 13b by a bolt.

As shown in FIGS. 1 to 3, each tank cover 30 is disposed directly above the corresponding side cover 20 so as to cover the fuel tank 8. Each tank cover 30 is connected to the fuel tank 8. Each tank cover 30 overlaps in part with the corresponding side cover 20 in the vehicle side view. Each tank cover 30 covers the fuel tank 8 from a lateral side. Each tank cover 30 is disposed at an interval from the fuel tank 8 in the vehicle width direction. In the vehicle side view, a lower end portion 30a of each tank cover 30 straightly extends in the back-and-forth direction. In other words, a boundary part between each tank cover 30 and the corresponding side cover 20 straightly extends in the back-and-forth direction in the vehicle side view. In the vehicle side view, the lower end portion 30a of each tank cover 30 and a lower end portion 9a of the seat 9 extend on straight lines approximately overlapping with each other.

In the present preferred embodiment, the straddled vehicle 100 includes a tank center cover 31 covering the fuel tank 8 from above. The tank center cover 31 is coupled to the pair of tank covers 30. The tank center cover 31 is not fixed to the fuel tank 8. It should be noted that the tank center cover 31 may be omitted or may be provided together with the pair of tank covers 30 as an integrated component.

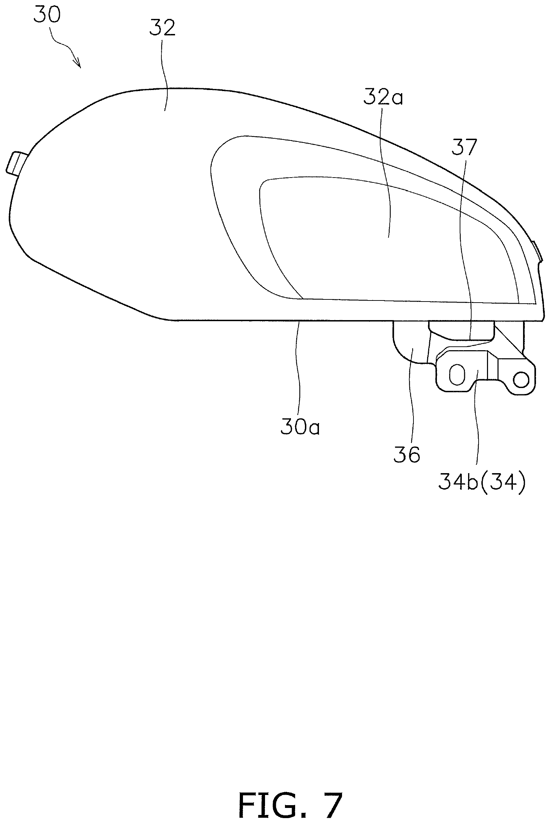

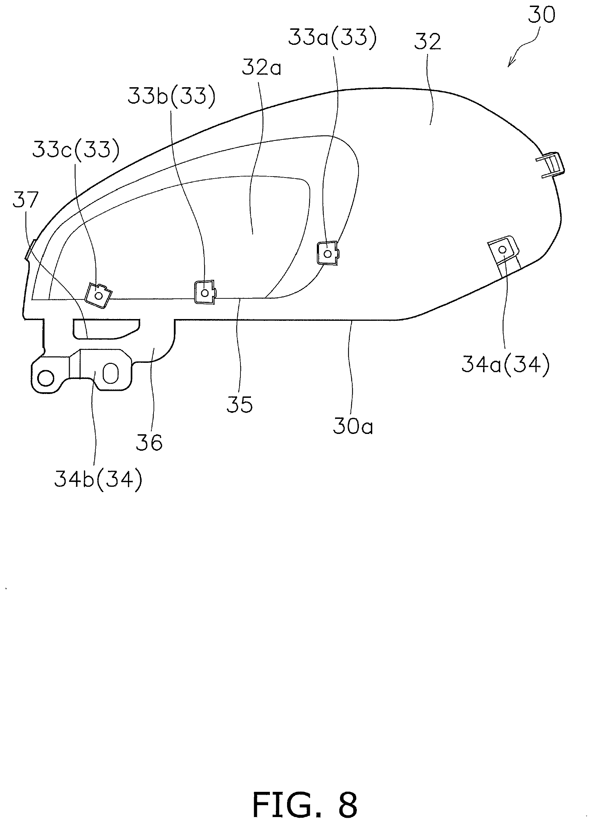

FIG. 7 is a view of one of the tank covers 30 seen from the outer side in the vehicle width direction. FIG. 8 is a view of the tank cover 30 seen from the inner side in the vehicle width direction. Each tank cover 30 includes a cover body 32 and at least one cover fastening portion 33. Preferably, each tank cover 30 further includes at least one frame fastening portion 34.

The cover body 32 is shaped approximately along the contour of the fuel tank 8 and covers the fuel tank 8 from a lateral side. The cover body 32 includes a knee grip portion 32a. The knee grip portion 32a is shaped to be recessed from the outer side to the inner side in the vehicle width direction. The knee grip portion 32a is provided in a region ranging from an intermediate part to a rear part of the cover body 32.

The at least one cover fastening portion 33 of each tank cover 30 is provided in correspondence to the cover fastening portions 23 of the corresponding side cover 20. In other words, the at least one cover fastening portion 33 overlaps with the cover fastening portions 23 of the corresponding side cover 20 in the vehicle side view. The at least one cover fastening portion 33 is disposed on the inner side of the cover body 32. In other words, the cover fastening portions 23 of the corresponding side cover 20 are disposed on the inner side of the cover body 32. In the vehicle side view, at least one of the cover fastening portions 23 is disposed in a region around the knee grip portion 32a. In the vehicle side view, the at least one cover fastening portion 33 is disposed in adjacent to an edge portion 35 provided on the inner side of the knee grip portion 32a.

Detailedly, the at least one cover fastening portion 33 includes first to third cover fastening portions 33a to 33c corresponding to the first to third cover fastening portions 25 to 27. The first cover fastening portion 33a overlaps with the first cover fastening portion 25 in the vehicle side view. The first cover fastening portion 33a is provided with a through hole penetrating therethrough in the vehicle width direction. The first cover fastening portion 33a is fixed to the first cover fastening portion 25 by a bolt.

The second cover fastening portion 33b overlaps with the second cover fastening portion 26 in the vehicle side view. The second cover fastening portion 33b overlaps in part with the lower end of the edge portion 35 in the vehicle side view. The second cover fastening portion 33b is provided with a through hole penetrating therethrough in the vehicle width direction. The second cover fastening portion 33b is fixed to the second cover fastening portion 26 by a bolt.

The third cover fastening portion 33c overlaps with the third cover fastening portion 27 in the vehicle side view. The third cover fastening portion 33c overlaps in part with the lower end of the edge portion 35 in the vehicle side view. The third cover fastening portion 33c is provided with a through hole penetrating therethrough in the vehicle width direction. The third cover fastening portion 33c is fixed to the third cover fastening portion 27 by a bolt.

The at least one frame fastening portion 34 of each tank cover 30 includes a first frame fastening portion 34a and a second frame fastening portion 34b. The first frame fastening portion 34a is disposed on the inner side of the cover body 32 and more forward than the knee grip portion 32a. The first frame fastening portion 34a is fixed to a bracket 12d provided on the forwardly and backwardly extending portion 12a of the corresponding main frame 12 by a bolt.

The second frame fastening portion 34b of each tank cover 30 is disposed on the inner side of the cover body 21 of the corresponding side cover 20. The second frame fastening portion 34b is disposed at an interval from the first frame fastening portion 34a in the back-and-forth direction. In the vehicle side view, the second frame fastening portion 34b is located between the third cover fastening portion 27 and the second frame fastening portion 29. The second frame fastening portion 34b is fixed to a bracket 52 provided on the upper rear frame 13a by a bolt.

The second frame fastening portion 34b is disposed below the lower end portion 30a of the cover body 32. Here, each tank cover 30 further includes an extending portion 36 extending more downward than the fuel tank 8 in the vehicle side view. The second frame fastening portion 34b is provided in a lower part of the extending portion 36.

The extending portion 36 of each tank cover 30 is connected to the corresponding side cover 20. The extending portion 36 extends more downward than the upper end portion 21a of the cover body 21 of the corresponding side cover 20. The extending portion 36 extends more downward than the lower end portion 30a of the cover body 32 of the corresponding tank cover 30. The extending portion 36 is disposed on the inner side of the lower end portion 30a of the cover body 32 of the corresponding tank cover 30 in the vehicle width direction. In the vehicle side view, the extending portion 36 overlaps with the cover body 21 of the corresponding side cover 20. The extending portion 36 is disposed directly below the knee grip portion 32a.

The extending portion 36 includes an opening portion 37 for causing one of the cover fastening portions 23 to be inserted therein. The opening portion 37 is opened in the up-and-down direction and the vehicle width direction. Each side cover 20 is configured to be fitted to the corresponding tank cover 30 through the opening portion 37. For example, one of each side cover 20 and the corresponding tank cover 30 is provided with a tab portion, whereas the other is provided with a lock portion engaged with the tab portion. In the present preferred embodiment, the third cover fastening portion 27 of each side cover 20 is inserted into the opening portion 37 from the outer side in the vehicle width direction, whereby each side cover 20 is fitted to the corresponding tank cover 30. Accordingly, an overlapping portion 38 is provided in a region around the opening portion 37. In the overlapping portion 38, each side cover 20 and the corresponding tank cover 30 alternately overlap with each other in the vehicle width direction. The overlapping portion 38 inhibits the corresponding tank cover 30 from being deflected by vibration transmitted thereto from the fuel tank 8 and absorbs vibration transmitted to each side cover 20 from the corresponding tank cover 30. In the overlapping portion 38, relevant components are connected in the form of mating. At this time, the third cover fastening portion 27 overlaps with the third cover fastening portion 33c in the vehicle side view. The third cover fastening portion 27 is disposed above the extending portion 36. The third cover fastening portion 27 is fixed to the corresponding tank cover 30 on the inner side of the corresponding tank cover 30.

The frame fastening portions 24 of the corresponding side cover 20 are disposed below the extending portion 36 of each tank cover 30. Detailedly, the first frame fastening portion 28 and the second frame fastening portion 29 are disposed below the overlapping portion 38.

In the straddled vehicle 100 according to the aforementioned preferred embodiment, the cover fastening portions 23 are provided to overlap with each tank cover 30 in the vehicle side view. Hence, each tank cover 30 can be increased in entire size. Accordingly, vibration of each tank cover 30 can be made small in amplitude. In other words, vibration transmitted from the fuel tank 8 becomes likely to be absorbed by each tank cover 30. Accordingly, the vibration of each tank cover 30 can be inhibited.

In each side cover 20, the cover fastening portions 23 and the frame fastening portions 24 are disposed at an interval in the up-and-down direction. Hence, vibration transmitted to each side cover 20 from the corresponding tank cover 30 can be absorbed by deflection of each side cover 20 and the corresponding tank cover 30 caused at the mating surfaces thereof located between the frame fastening portions 24 and the cover fastening portions 23. Accordingly, vibration transmitted to each side cover 20 from the corresponding tank cover 30 can be inhibited.

Especially, in the present preferred embodiment, relevant components are connected in the form of mating in the overlapping portion 38, and the frame fastening portions 24 of each side cover 20 are disposed below the overlapping portion 38 while the cover fastening portions 23 of each side cover 20 are disposed above the overlapping portion 38. Accordingly, deflection of the corresponding tank cover 30 can be further effectively inhibited by the overlapping portion 38.

Besides, each tank cover 30 is fixed to the corresponding side cover 20. Hence, each tank cover 30 is herein enhanced in stiffness compared to a configuration that only each tank cover 30 is fixed to the fuel tank 8. Moreover, each tank cover 30 and the corresponding side cover 20 are fastened at the mating surfaces thereof, whereby deflection of each tank cover 30 can be effectively inhibited.

Furthermore, in the vehicle side view, the gap between each tank cover 30 and the corresponding side cover 20 is invisible in appearance, whereby external aesthetics can be enhanced.

Yet furthermore, each tank cover 30 and the seat 9 are disposed such that the lower end portion 30a and the lower end portion 9a extend on straight lines approximately overlapping with each other in the vehicle side view. Hence, knee gripping can be performed in the vicinity of the cover fastening portions 23 with high stiffness.

## Claims

1. A straddled vehicle (100) comprising:
a head pipe (11);
a vehicle body frame (2) including a main frame (12) and a rear frame (13), the main frame (12) extending backward, with regards to a back-and-forth direction of the vehicle, from the head pipe (11), the rear frame (13) extending backward, with regards to a back-and-forth direction of the vehicle, from the main frame (12);
a side cover (20) fixed to the vehicle body frame (2);
a fuel tank (8) supported by the vehicle body frame (2); and
a tank cover (30) connected to the fuel tank (8), the tank cover (30) including a cover body (32), the cover body (32) disposed directly above the side cover (20) in order to cover the fuel tank (8), wherein
the side cover (20) is fixed to the tank cover (30) on an inner side, with regards to a width direction of the vehicle, of the tank cover (30), the side cover (20) including at least one cover fastening portion (23) and at least one frame fastening portion (24),
the at least one cover fastening portion (23) fixed to the tank cover (30) and disposed to overlap with the tank cover (30) in a vehicle side view, the at least one frame fastening portion (24) fixed to the vehicle body frame (2) and disposed below, with regards to an up-and-down direction of the vehicle, the cover fastening portion (23),
whereby the tank cover (30) further includes an extending portion (36),
the extending portion (36) extending more downward, with regards to an up-and-down direction of the vehicle, than the fuel tank (8), the extending portion (36) connected to the side cover (20),
**characterised in that**
the extending portion (36) includes an opening portion (37) for inserting therein one of the at least one cover fastening portion (23), and
the side cover (20) is fitted to the tank cover (30) through the opening portion (37).

2. The straddled vehicle (100) according to claim 1, **characterized in that** the at least one frame fastening portion (24) is disposed below, with regards to an up-and-down direction of the vehicle, the cover body (32) of the tank cover (30).

3. The straddled vehicle (100) according to claim 1 or 2, **characterized in that** the cover body (32) of the tank cover (30) includes a knee grip portion (32a), and
at least one of the at least one cover fastening portion (23) is disposed in a region around the knee grip portion (32a) in the vehicle side view.

4. The straddled vehicle (100) according to any one of claims 1 to 3, **characterized in that** the cover body (32) of the tank cover (30) straightly extends at a lower end portion (30a), with regards to an up-and-down direction of the vehicle, thereof in the vehicle side view.

5. The straddled vehicle (100) according to any one of claims 1 to 4, **characterized in that** the at least one cover fastening portion (23) includes a plurality of cover fastening portions (23) provided at intervals in the back-and-forth direction of the vehicle while the at least one frame fastening portion (24) includes a plurality of frame fastening portions (24) provided at intervals in the back-and-forth direction of the vehicle.

6. The straddled vehicle (100) according to any one of claims 1 to 5, **characterized in that** the main frame (12) is exposed outward, when viewed from the outside of the vehicle.

7. The straddled vehicle (100) according to any one of claims 1 to 6, further comprising:
a seat (9) supported by the rear frame (13), wherein the tank cover (30) and the seat (9) extend at lower end portions (30a, 9a), with regards to an up-and-down direction of the vehicle, thereof on straight lines approximately overlapping with each other in the vehicle side view.

8. The straddled vehicle (100) according to any one of claims 1 to 7, **characterized in that** the one of the at least one cover fastening portion (23) inserted into the opening portion (37) is fixed to the tank cover (30) and is disposed above, with regards to an up-and-down direction of the vehicle, the extending portion (36), and
the at least one frame fastening portion (24) of the side cover (20) is disposed below, with regards to an up-and-down direction of the vehicle, the extending portion (36).

9. The straddled vehicle (100) according to any one of claims 1 to 8, **characterized in that** the extending portion (36) is disposed directly below, with regards to an up-and-down direction of the vehicle, the knee grip portion (32a) of the tank cover (30).

10. The straddled vehicle (100) according to any one of claims 1 to 9, **characterized in that** the tank cover (30) includes a frame fastening portion (34) fixed to the vehicle body frame (2), and
the frame fastening portion (34) of the tank cover (30) is provided in the extending portion (36).

## Patentansprüche

1. Ein Spreiz-Sitz-Fahrzeug (100), das umasst:
ein Kopfrohr (11);
einen Fahrzeugkörperrahmen (2), der einen Hauptrahmen (12) und einem hinteren Rahmen (13) enthält, der Hauptrahmen (12) erstreckt sich nach hinten, in Bezug auf eine Rückwärts- und Vorwärtsrichtung des Fahrzeugs, von dem Kopfrohr (11), der hintere Rahmen (13) erstreckt sich nach hinten, in Bezug auf eine Rückwärts- und Vorwärtsrichtung des Fahrzeugs, von dem Hauptrahmen (12);
eine Seitenabdeckung (20), die am Fahrzeugkörperrahmen (2) befestigt ist;
einen Kraftstofftank (8), der durch den Fahrzeugkörperrahmen (2) gelagert ist, und
eine Tankabdeckung (30), die mit dem Kraftstofftank (8) verbunden ist, die Tankabdeckung (30) enthält einen Abdeckungskörper (32), der Abdeckungskörper (32) ist direkt oberhalb der Seitenabdeckung (20) angeordnet, um den Kraftstofftank (8) abzudecken, wobei
die Seitenabdeckung (20) an der Tankabdeckung (30) an einer Innenseite der Tankabdeckung (30) in Bezug auf eine Breitenrichtung des Fahrzeugs befestigt ist, die Seitenabdeckung (20) zumindest einen Abdeckungsbefestigungsabschnitt (23) und zumindest einen Rahmenbefestigungsabschnitt (24) enthält, der zumindest eine Abdeckungsbefestigungsabschnitt (23) ist an der Tankabdeckung (30) befestigt und angeordnet, um die Tankabdeckung (30) in einer Fahrzeugseitenansicht zu überlappen, der zumindest eine Rahmenbefestigungsabschnitt (24) ist an dem Fahrzeugkörperrahmen (2) befestigt und in Bezug auf eine Auf- und Abwärtsrichtung des Fahrzeugs unterhalb des Abdeckungsbefestigungsabschnitts (23) angeordnet, wobei die Tankabdeckung (30) weiterhin einen Erstreckungsabschnitt (36) enthält, der Erstreckungsabschnitt (36) in Bezug auf eine Auf- und Abwärtsrichtung des Fahrzeugs weiter nach unten erstreckt als der Kraftstofftank (8), der Erstreckungsabschnitt (36) mit der Seitenabdeckung (20) verbunden ist, **dadurch gekennzeichnet, dass**
der Erstreckungsabschnitt (36) einen Öffnungsabschnitt (37) enthält, um darin einen der zumindest einen Abdeckungsbefestigungsabschnitte (23) einzuführen, und
die Seitenabdeckung (20) durch den Öffnungsabschnitt (37) auf die Tankabdeckung aufgesetzt ist.

2. Das Spreiz-Sitz-Fahrzeug (100) gemäß Anspruch 1, **dadurch gekennzeichnet, dass** der zumindest eine Rahmenbefestigungsabschnitt (24) in Bezug auf eine Auf- und Abwärtsrichtung des Fahrzeugs unterhalb des Abdeckungskörpers (32) der Tankabdeckung (30) angeordnet ist.

3. Das Spreiz-Sitz-Fahrzeug (100) gemäß Anspruch 1 oder 2, **dadurch gekennzeichnet, dass** der Abdeckungskörper (32) der Tankabdeckung (30) einen Kniegriffabschnitt (32a) enthält, und
zumindest einer der zumindest einen Abdeckungsbefestigungsabschnitte (23) in einem Bereich um den Kniegriffabschnitt (32a) in der Fahrzeugseitenansicht angeordnet ist.

4. Das Spreiz-Sitz-Fahrzeug (100) gemäß irgendeinem der Ansprüche 1 bis 3, **dadurch gekennzeichnet, dass** der Abdeckungskörper (32) der Tankabdeckung (30) an einem unteren Endabschnitt (30a) in Bezug auf eine Auf- und Abwärtsrichtung des Fahrzeugs in der Fahrzeugseitenansicht gerade erstreckt.

5. Das Spreiz-Sitz-Fahrzeug (100) gemäß irgendeinem der Ansprüche 1 bis 4, **dadurch gekennzeichnet, dass** der zumindest eine Abdeckungsbefestigungsabschnitt (23) eine Mehrzahl von Abdeckungsbefestigungsabschnitten (23) umfasst, die in Abständen in der Rückwärts- und Vorwärtsrichtung des Fahrzeugs vorgesehen sind, während der zumindest eine Rahmenbefestigungsabschnitt (24) eine Mehrzahl von Rahmenbefestigungsabschnitten (24) umfasst, die in Abständen in der Rückwärts- und Vorwärtsrichtung des Fahrzeugs vorgesehen sind.

6. Das Spreiz-Sitz-Fahrzeug (100) gemäß irgendeinem der Ansprüche 1 bis 5, **dadurch gekennzeichnet, dass** der Hauptrahmen (12) von der Außenseite des Fahrzeugs aus gesehen nach außen frei liegt.

7. Das Spreiz-Sitz-Fahrzeug (100) gemäß irgendeinem der Ansprüche 1 bis 6, das weiterhin umfasst:
einen Sitz (9), der durch den hinteren Rahmen (13) gelagert ist, wobei die Tankabdeckung (30) und der Sitz (9) sich an unteren Endabschnitten (30a, 9a) in Bezug auf eine Auf- und Abwärtsrichtung des Fahrzeugs auf geraden Linien erstrecken, die sich in der Fahrzeugseitenansicht ungefähr überlappen.

8. Das Spreiz-Sitz-Fahrzeug (100) gemäß irgendeinem der Ansprüche 1 bis 7, **dadurch gekennzeichnet, dass** der eine der zumindest einen Abdeckungsbefestigungsabschnitte (23), der in den Öffnungsabschnitt (37) eingesetzt ist, an der Tankabdeckung (30) befestigt ist, und in Bezug auf eine Auf- und Abwärtsrichtung des Fahrzeugs oberhalb des Erstreckungsabschnitts (36) angeordnet ist, und
der zumindest eine Rahmenbefestigungsabschnitt (24) der Seitenabdeckung (20) in Bezug auf eine Auf- und Abwärtsrichtung des Fahrzeugs unterhalb des Erstreckungsabschnitts (36) angeordnet ist.

9. Das Spreiz-Sitz-Fahrzeug (100) gemäß irgendeinem der Ansprüche 1 bis 8, **dadurch gekennzeichnet, dass** der Erstreckungsabschnitt (36) in Bezug auf eine Auf- und Abwärtsrichtung des Fahrzeugs direkt unter dem Kniegriffabschnitt (32a) der Tankabdeckung (30) angeordnet ist.

10. Das Spreiz-Sitz-Fahrzeug (100) gemäß irgendeinem der Ansprüche 1 bis 9, **dadurch gekennzeichnet, dass** die Tankabdeckung (30) einen Rahmenbefestigungsabschnitt (34) enthält, der an dem Fahrzeugkörperrahmen (2) befestigt ist, und
der Rahmenbefestigungsabschnitt (34) der Tankabdeckung (30) in dem Erstreckungsabschnitt (36) vorgesehen ist.

## Revendications

1. Véhicule à enfourcher (100) comprenant :
un tube de tête de fourche (11) ;
un cadre de véhicule (2) incluant un cadre principal (12) et un cadre arrière (13), le cadre principal (12) s'étendant vers l'arrière, par rapport à une direction avant-arrière du véhicule, depuis le tube de tête de fourche (11), le cadre arrière (13) s'étendant vers l'arrière, par rapport à une direction avant-arrière du véhicule, depuis le cadre principal (12) ;
un capot latéral (20) fixé au cadre de véhicule (2) ;
un réservoir de carburant (8) soutenu par le cadre de véhicule (2) ; et
un capot de réservoir (30) connecté au réservoir de carburant (8), le capot de réservoir (30) incluant un corps de capot (32),le corps de capot (32) disposé directement au-dessus du capot latéral (20) afin de couvrir le réservoir de carburant (8), dans lequel
le capot latéral (20) est fixé au capot de réservoir (30) sur un côté intérieur, par rapport à une direction de largeur du véhicule, du capot de réservoir (30), le capot latéral (20) incluant au moins une partie de fixation de capot (23) et au moins une partie de fixation de cadre (24), l'au moins une partie de fixation de capot (23) fixée au capot de réservoir (30) et disposée pour se superposer avec le capot de réservoir (30) dans une vue latérale de véhicule, l'au moins une partie de fixation de cadre (24) fixée au cadre de corps de véhicule (2) et disposée au-dessous, par rapport à une direction haut-bas du véhicule, de la partie de fixation de capot (23), par lequel
le capot de réservoir (30) inclut en outre une partie d'extension (36), la partie d'extension (36) s'étendant davantage vers le bas, par rapport à une direction haut-bas du véhicule, que le réservoir de carburant (8), la partie d'extension (36) connectée au capot latéral (20),
**caractérisé en ce que**
la partie d'extension (36) inclut une partie ouvrante (37) pour insérer en son sein une de l'au moins une partie de fixation de capot (23), et
le capot latéral (20) est attaché au capot de réservoir (30) via la partie d'ouverture (37).

2. Le véhicule à enfourcher (100) selon la revendication 1, **caractérisé en ce que** l'au moins une partie de fixation de cadre (24) est disposée au-dessous, par rapport à une direction haut-bas du véhicule, du corps de capot (32) du capot de réservoir (30).

3. Le véhicule à enfourcher (100) selon la revendication 1 ou 2, **caractérisé en ce que** le corps de capot (32) du capot de réservoir (30) inclut une partie d'adhérence pour genou (32a), et
au moins une de l'au moins une partie de fixation de capot (23) est disposée dans une zone autour de la partie d'adhérence pour genou (32a) dans la vue latérale de véhicule.

4. Le véhicule à enfourcher (100) selon l'une quelconque des revendications 1 à 3, **caractérisé en ce que** le corps de capot (32) du capot de réservoir (30) s'étend de manière rectiligne sur une partie d'extrémité inférieure (30a), par rapport à une direction haut-bas du véhicule, de celui-ci dans la vue latérale de véhicule.

5. Le véhicule à enfourcher (100) selon l'une quelconque des revendications 1 à 4, **caractérisé en ce que** l'au moins une partie de fixation de capot (23) inclut une pluralité de parties de fixation de capot (23) disposées à des intervalles dans une direction avant-arrière du véhicule tandis que l'au moins une partie de fixation de cadre (24) inclut une pluralité de parties de fixation de cadre (24) disposées à des intervalles dans la direction avant-arrière du véhicule.

6. Le véhicule à enfourcher (100) selon l'une quelconque des revendications 1 à 5, **caractérisé en ce que** le cadre principal (12) est exposé vers l'extérieur, lorsque visualisé depuis l'extérieur du véhicule.

7. Le véhicule à enfourcher (100) selon l'une quelconque des revendications 1 à 6, comprenant en outre :
un siège (9) soutenu par le cadre arrière (13), dans lequel le capot de réservoir (30) et le siège (9) s'étendent au niveau de parties d'extrémité inférieure (30a, 9a), par rapport à une direction haut-bas du véhicule, de celui-ci sur des lignes droites se superposant approximativement l'une l'autre dans la vue latérale de véhicule.

8. Le véhicule à enfourcher (100) selon l'une quelconque des revendications 1 à 7, **caractérisé en ce que** l'une de l'au moins une partie de fixation de capot (23) insérée dans la partie ouvrante (37) est fixée au capot de réservoir (30) et est disposée au-dessus, par rapport à une direction haut-bas du véhicule, de la partie d'extension (36), et
l'au moins une partie de fixation de cadre (24) du capot latéral (20) est disposée au-dessous, par rapport à une direction haut-bas du véhicule, de la partie d'extension (36) .

9. Le véhicule à enfourcher (100) selon l'une quelconque des revendications 1 à 8, **caractérisé en ce que** la partie d'extension (36) est disposée directement au-dessous, par rapport à une direction haut-bas du véhicule, de la partie d'adhérence pour genou (32a) du capot de réservoir (30).

10. Le véhicule à enfourcher (100) selon l'une quelconque des revendications 1 à 9, **caractérisé en ce que** le capot de réservoir (30) inclut une partie de fixation de trame (34) fixée au cadre de corps de véhicule (2), et
la partie de fixation de cadre (34) du capot de réservoir (30) est disposée dans la partie d'extension (36) .
